# EUROPÄISCHE PATENTANMELDUNG

(11) **EP 1 122 686 A2**
(43) Veröffentlichungstag der Anmeldung: **08.08.2001**
(21) Anmeldenummer: 00710037.3
(22) Anmeldetag: 06.12.2000
(51) Int. Cl.: G06K 19/077

(54) **Chipkarte**

(30) Priorität: 09.12.1999 DE 19959364
(71) Anmelder: Orga Kartensysteme GmbH, 33104 Paderborn (DE)
(72) Erfinder: König, Karl-Heinz, 38315 Schladen (DE)

(57) **Zusammenfassung**

Es wird eine Chipkarte (1) mit einem Chipkartenkörper (2) und einem auf diesem angeordneten Kontaktflächen tragenden Teil (4), wobei die Kontaktflächen elektrisch leitend mit mindestens einer im Chipkartenkörper enthaltenen elektronischen Schaltungsbaueinheit (8) verbunden sind, vorgestellt, bei der die elektronische Schaltungsbaueinheit (8) im Chipkartenkörper (2) räumlich von dem die Konkaktflächen tragenden Teil (4) getrennt ist, wobei die elektronische Schaltungsbaueinheit über im Chipkartenkörper verlaufende Leiterbahnen (13, 14) mit den Kontaktflächen elektrisch leitend verbunden ist.

Die erfindungsgemäße Chipkarte bietet den Vorteil, daß die für erhöhte Informationserfassung, Speicherung und Weiterverarbeitung notwendigen elektronischen Bauelemente in großer Zahl in den Kartenkörper unter Beibehaltung der nach internationaler Norm festgelegten Abmaße integriert werden können.

## Beschreibung

Die Erfindung betrifft eine Chipkarte mit einem Chipkartenkörper und einem auf diesem angeordneten Kontaktflächen tragenden Teil, wobei die Kontaktflächen elektrisch leitend mit mindestens einer im Chipkartenkörper enthaltenen elektronischen Schaltungsbaueinheit verbunden sind.

Chipkarten der eingangs geschilderten gattungsgemäßen Art werden bereits in großen Stückzahlen als Bankkarten, Telefonkarten, Zugangsberechtigungskarten, Krankenkassenkarten und dergleichen eingesetzt. Der Datenaustausch mit externen Geräten sowie die Energieversorgung erfolgt bei derartigen Chipkarten über die Kontaktflächen, welche in der Regel sechs elektrisch getrennte Einzelsegmente sind. An der Unterseite der Kontaktfläche wird herkömmlich ein IC-Baustein (Chip) eventuell unter Zwischenschaltung eines Trägerelementes aufgebracht und mit den Kontaktflächen elektrisch leitend verbunden. Die Baueinheit aus Kontaktfläche und Chip, welche als Chipmodul bezeichnet wird, wird in einem abschließenden Arbeitsgang in der Kavität des Chipkartenkörpers plaziert und durch Verklebung gesichert, wobei bei bestimmten Chipkarten außerdem eine elektrisch leitende Verbindung zwischen Chipmodul und einer zusätzlich in Chipkartenkörper angeordneten Spule hergestellt werden kann.

Der Aufbau derartiger Chipkarten hat sich prinzipiell bewährt, jedoch machen die zunehmend komplexer werdenden Aufgabenstellungen hinsichtlich Informationserfassung, Informationsspeicherung und -weiterverarbeitung die Integration einer Vielzahl elektronischer Bauelemente in den Chipkartenkörper erforderlich, wobei natürlich die international gültigen Normen hinsichtlich der Abmaße derartiger Chipkarten beibehalten werden müssen.

Aufgabe der vorliegenden Erfindung ist es daher, eine Chipkarte der gattungsgemäßen Art so weiterzubilden, daß auch zukünftige höhere Anforderungen bezüglich Rechnerkapazität, Informationserfassung, Speicherung und Weiterverarbeitung problemlos erfüllt werden können und die Chipkarten darüber hinaus aufgrund ihrer erforderlichen großen Stückzahl kostengünstig herstellbar sind. Darüber hinaus soll die erfindungsgemäße Chipkarte sich im Rahmen des Herstellungsvorganges durch eine geringe Ausschußrate auszeichnen.

Die Aufgabe wird erfindungsgemäß dadurch gelöst, daß die elektronische Schaltungsbaueinheit im Chipkartenkörper räumlich von dem die Konkaktflächen tragenden Teil getrennt ist, wobei die elektronische Schaltungsbaueinheit über im Chipkartenkörper verlaufende Leiterbahnen mit den Kontaktflächen elektrisch leitend verbunden ist.

Durch die erfindungsgemäße Gestaltung bietet sich gegenüber der bisherigen elektronischen Aufbautechnik von Chipkarten die Möglichkeit, größere Schaltungen mit einer Vielzahl von Bauelementen in den Kartenkörper zu integrieren, sowie analoge und digitale Schaltungseinheiten zu kombinieren. Dabei kann die elektronische Schaltungsbaueinheit an beliebiger Stelle des Chipkartenkörpers angeordnet werden, ohne Rücksicht auf bestehende Normungen im Hinblick auf die Anordnung der Kontaktflächen nehmen zu müssen.

Spezielle Ausgestaltungen des Gegenstandes der Erfindung ergeben sich aus den Merkmalen der Unteransprüche.

Es hat sich insbesondere als kostengünstig erwiesen, den in herkömmlichen Chipkarten vorhandenen Chip in die elektronische Schaltungsbaueinheit zu integrieren. Durch die Integration entsteht eine Baueinheit, welche bereits vor dem Einbau in die Chipkarte fertiggestellt und außerhalb des Kartenkörpers getestet werden kann. Der Aufbau der einzelnen elektronischen Bauelemente wie beispielsweise integrierter Schaltkreise erfolgt hierbei vorteilhafterweise auf einem gemeinsamen Baueinheitenträger, beispielsweise in Form einer Kunststoff-Folie, wobei der Baueinheitenträger Leiterbahnen zur Verbindung der integrierten Schaltkreise untereinander aufweist.

Die verwendeten integrierten Schaltkreise können im Rahmen der erfindungsgemäßen Gestaltung auch Sensorelemente sein, die beispielsweise in der Lage sind, Eigenschaften von Flüssigkeiten zu messen, zu speichern und zu verarbeiten. Um derartige Messungen durchzuführen, wird der mit der elektronischen Schaltungsbaueinheit versehene Teilbereich der Chipkarte in die Flüssigkeit eingetaucht, so daß die entsprechende Datenerfassung erfolgen kann. Die für die Außenkontaktierung der Chipkarte notwendigen Kontaktflächen befinden sich bei dieser speziellen Anwendung in einem Bereich der Chipkarte, der sich außerhalb der Eintauchtiefe in die Flüssigkeit befindet, so daß eine Verunreinigung, Verätzung oder sonstige Beeinträchtigung der Kontaktflächen ausgeschlossen ist. Nach Beendigung des Messvorganges wird die Chipkarte in ein Auswertegerät eingeschoben und die in der elektronischen Baueinheit gespeicherten und eventuell dort bereits berechneten Kenndaten der Flüssigkeit für die weitere Bearbeitung ausgelesen. Eine derartige Anwendung von Chipkarten als Sensor- oder Messkarten ist bei der im Stand der Technik üblichen Aufbauweise ausgeschlossen.

Um die Kompaktheit der elektronischen Schaltungsbaueinheit zu erhöhen und gleichzeitig eine große Anzahl elektronischer Bauelemente wie z.B. integrierter Schaltkreise auf dem Baueinheitenträger anzuordnen, kann es darüber hinaus zweckmäßig sein, die Bauelemente auf beiden Flachseiten des Baueinheitenträgers anzuordnen, wobei die zur Verbindung der Bauelemente dienenden auf dem Baueinheitenträger angeordneten Leiterbahnen Verbindungsstellen zur Durchkontaktierung durch den Bauelemententräger aufweisen. Die Erfindung hat darüber hinaus den Vorteil, daß die elektronische Schaltungsbaueinheit durch die Aufhebung der funktionalen Einheit von Kontaktfläche und IC-Baustein (Chip) die Möglichkeit bietet, die Vorteile unterschiedlicher Montagetechniken aus dem Gesamtspektrum von Verschweißungen, Verklebungen und Verlötungen zu nutzen sowie unterschiedliche elektrische Verbindungstechniken der Bauelemente mit den Leiterbahnen des Baueinheitenträgers wie beispielsweise die Verbindungstechnik Chip and Wire und Chip on bord in Kombination mit der Flip-Chip- und Ball-grid- Array-Technologie zu verwenden. Im folgenden wird ein Ausführungsbeispiel des Gegenstandes der Erfindung anhand der beigefügten Figuren näher erläutert. Es zeigt:
- Figur 1:: eine Draufsicht auf eine erfindungsgemäße Chipkarte und
- Figur 2:: eine schematische Schnittdarstellung durch die erfindungsgemäße Chipkarte der Figur 1.

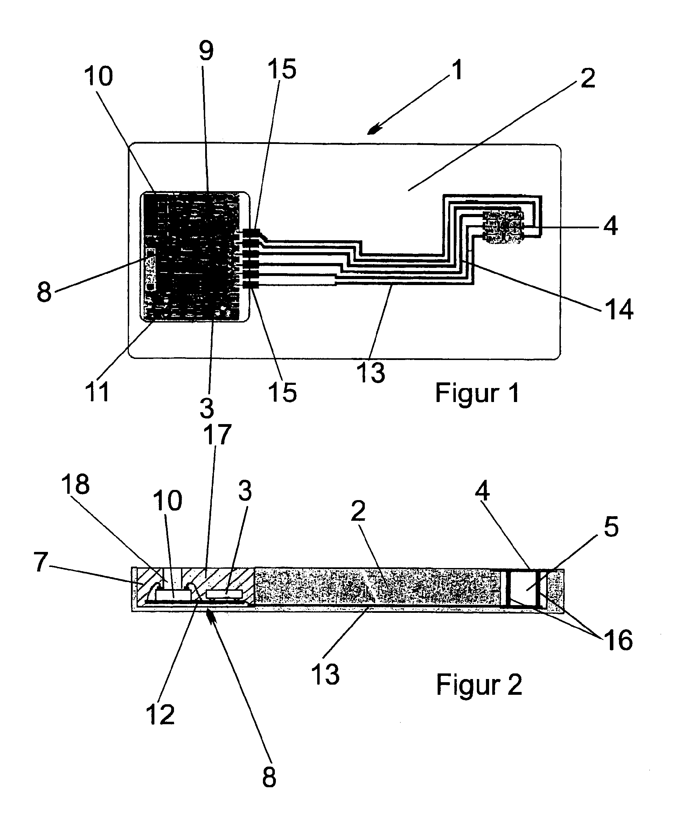

Die in Figur 1 in ihrer Gesamtheit mit 1 bezeichnete Chipkarte weist einen Chipkartenkörper 2 auf, der aus Kunststoff besteht und vorteilhafterweise im Spritzgussverfahren hergestellt wird. Auf einer Flachseite des Chipkartenkörpers 2 befindet sich in einem Randbereich ein Kontaktflächen tragendes Teil 4. Die in diesem Ausführungsbeispiel sechs Kontaktflächen 4 befinden sich als obere Abdeckung über einer Kavität 5, welche aus Figur 2 ersichtlich ist und in der gemäß dem Stand der Technik üblicherweise ein mit einem IC-Baustein 3 (Chip) versehenes und die Kontaktflächen tragendes Chipmodul eingesetzt ist.

In der erfindungsgemäßen Ausgestaltung der Chipkarte 1 ist der IC-Baustein 3 auf einer elektronischen Schaltungsbaueinheit 8 angeordnet, welche sich auf der gleichen Flachseite des Chipkartenkörpers 2 im entgegengesetzten seitlichen Bereich in einer weiteren Kavität 7 befindet. Die elektronische Schaltungsbaueinheit 8 besteht aus einer Anzahl elektronischer Bauelemente, die auf einem gemeinsamen Baueinheitenträger 12 angeordnet sind, wobei in der schematischen Darstellung der Figur 2 die elektronische Schaltungsbaueinheit aus dem IC-Baustein 3 und einem weiteren integrierten Schaltkreis 10 besteht. Aus der Draufsicht der Figur 1 ist ersichtlich, daß in Ergänzung zur schematischen Darstellung der elektronischen Schaltungsbaueinheit 8 in Figur 2 diese neben den integrierten Schaltkreisen 10 und 11 auf dem Baueinheitenträger 12 Leiterbahnen 9 aufweist, die zur Verbindung der einzelnen Schaltkreise 10, 11 untereinander dienen. Die elektronische Schaltungsbaueinheit 8 bildet somit zusammen mit dem Baueinheitenträger 12 eine kompakte Einheit, die bereits vor dem Einbau in die Chipkarte 1 hinsichtlich ihrer elektrischen Funktionalität getestet werden kann. Zu diesem Zweck werden Anschlusskontakte 15 der elektronischen Schaltungsbaueinheit 8 mit entsprechenden Testgeräten verbunden. Die eigentliche Aufgabe der Anschlusskontakte 15 besteht jedoch darin, als Ausgangspunkte der Leiterbahnen 13, 14 zu dienen, welche die elektronische Schaltungsbaueinheit 8 mit den Kontaktflächen des Teiles 4 verbinden.

Die Leiterbahnen 13, 14 sind in den Chipkartenkörper 3 eingebettet, wobei das Niveau der innen liegenden Leiterbahnen 13, 14 mit dem höher gelegenen Niveau der Kontaktflächen durch elektrisch leitende Verbindungsstifte 16 erfolgt. Die räumliche Trennung zwischen den Kontaktflächen und der elektronischen Schaltungsbaueinheit 8 ermöglicht es, die erfindungsgemäße Chipkarte beispielsweise als Sensoroder Messkarte einzusetzen. Zu diesem Zweck ist auf der elektronischen Schaltungsbaueinheit 8 der integrierte Schaltkreis 10 beispielsweise als Sensormesselement ausgeführt, welches beim Eintauchen in eine Flüssigkeit zur Messdatenerfassung von Flüssigkeitseigenschaften dienen kann. Hierbei wird die Chipkarte 1 nur soweit eingetaucht, daß das Sensorelement bedeckt ist. Eine Verschmutzung oder sonstige Beeinträchtigung der Kontaktflächen, welche zur externen Datenübertragung der gewonnenen Informationen dienen, ist somit zuverlässig ausgeschlossen.

Die Bauelemente der elektronischen Schaltungsbaueinheit 8 lassen sich auf dem Baueinheitenträger 12 auf unterschiedliche Art und Weise sowohl festlegen als auch elektrisch mit den auf dem Baueinheitenträger 12 angeordneten Leiterbahnen 9 verbinden. So sind als Verbindungstechniken beispielsweise ein Aufschweißen, ein Aufkleben oder Auflöten der integrierten Schaltkreise 10, 11 denkbar, als Verbindungstechniken bieten sich beispielsweise die Chip-and-Wire-Technik an, die schematisch zum Anschluss des integrierten Schaltkreises 10 dargestellt ist, sowie die Ball-Grid-Array-Technologie, wie sie zur elektrischen Verbindung des IC-Bausteines 3 auf dem Baueinheitenträger 12 verwendet wird, an.

Nach Anordnung der elektronischen Schaltungsbaueinheit 8 innerhalb der Kavität 7 des Chipkartenkörpers 2 kann das verbleibende Volumen der Kavität 7 mittels eines geeigneten Lackmaterials 17 vergossen werden, so daß die Chipkarte 1 eine einheitliche Oberfläche erhält und die Kavität ganz oder teilweise abgedeckt ist. Alternativ hierzu kann im Falle der Verwendung eines Sensorelementes eine Zugangsöffnung 18 zur aktiven Sensorfläche ausgespart sein.

### Bezugszeichenliste:

- 1: Chipkarte
- 2: Chipkartenkörper
- 3: Chipmodul
- 4: Kontaktflächen tragendes Teil
- 5: Kavität
- 7: Kavität
- 8: elektronische Schaltungsbaueinheit
- 9: Leiterbahn
- 10: integrierter Schaltkreis
- 11: integrierter Schaltkreis
- 12: Baueinheitenträger
- 13: Leiterbahn
- 14: Leiterbahn
- 15: Anschlusskontakt
- 16: Verbindungsstift
- 17: Abdeckschicht
- 18: Zugangsöffnung

## Patentansprüche

1. Chipkarte (1) mit einem Chipkartenkörper (2) und einem auf diesem angeordneten Kontaktflächen tragenden Teil (4), wobei die Kontaktflächen elektrisch leitend mit mindestens einer im Chipkartenkörper enthaltenen elektronischen Schaltungsbaueinheit (8) verbunden sind, **dadurch gekennzeichnet, daß** die elektronische Schaltungsbaueinheit (8) im Chipkartenkörper (2) räumlich von dem die Kontaktflächen tragenden Teil (4) getrennt ist, wobei die elektronische Schaltungsbaueinheit über im Chipkartenkörper verlaufende Leiterbahnen (13, 14) mit den Kontaktflächen elektrisch leitend verbunden ist.

2. Chipkarte nach Anspruch 1, **dadurch gekennzeichnet, daß** der Chipkartenkörper eine erste sacklochartige Kavität (5) zur Aufnahme des die Kontaktflächen tragenden Teils (4) aufweist.

3. Chipkarte nach Anspruch 2, **dadurch gekennzeichnet, daß** das die Kontaktflächen tragende Teil (4) Verbindungsstifte (16) zur elekrisch leitenden Verbindung der gegenüber den Leiterbahnen (13, 14) auf unterschiedlichem Höhenniveau innerhalb des Chipkartenkörpers (2) liegenden Kontaktflächen mit den Leiterbahen (13, 14) aufweist.

4. Chipkarte nach einem der vorstehenden Ansprüche, **dadurch gekennzeichnet, daß** der Chipkartenkörper eine zweite von der ersten räumlich getrennte sacklochartige Kavität (6) zur Aufnahme der elektronischen Schaltungsbaueinheit (8) aufweist, wobei die Schaltungsbaueinheit (8) in der Kavität elektrisch leitend mit den Leiterbahnen (13, 14) verbunden ist.

5. Chipkarte nach einem der vorstehenden Ansprüche, **dadurch gekennzeichnet, daß** die elektronische Schaltungsbaueinheit (8) mindestens einen IC-Baustein (3) aufweist, der auf einem Baueinheitenträger (12) angeordnet ist.

6. Chipkarte nach Anspruch 5, **dadurch gekennzeichnet, daß** die elektronische Schaltungsbaueinheit (8) zwei oder mehrere IC-Bausteine (3, 10, 11) aufweist, die auf einem gemeinsamen Baueinheitenträger (12) angeordnet sind, wobei der Baueinheitenträger (12) Leiterbahnen (9) zur Verbindung der integrierten Schaltkreise (3, 10, 11) untereinander aufweist.

7. Chipkarte nach Anspruch 6, **dadurch gekennzeichnet, daß** die integrierten Schaltkreise (10, 11) und die Leiterbahnen (9) auf beiden Flachseiten des Baueinheitenträgers (12) angeordnet sind, wobei die Leiterbahnen (9) Verbindungsstellen zur Durchkontaktierung durch den Baueinheitenträger (12) aufweisen.

8. Chipkarte nach einem der vorstehenden Ansprüche , **dadurch gekennzeichnet, daß** die elektronische Schaltungsbaueinheit als einen integrierten Schaltkreis (10) ein Sensorelement aufweist.

9. Chipkarte nach einem der Ansprüche 4 bis 8, **dadurch gekennzeichnet, daß** der Chipkartenkörper (2) über der zweiten Kavität (7), in der sich die elektronische Schaltungsbaueinheit (8) befindet, zumindest teilweise eine Deckschicht (17) aufweist.

10. Chipkarte nach Anspruch 8 und 9 , **dadurch gekennzeichnet, daß** die Deckschicht (17) im Bereich des Sensorelementes eine Zugangsöffnung (18) aufweist.
